# EUROPÄISCHE PATENTSCHRIFT

(11) **EP 2 060 466 B1**
(45) Veröffentlichungstag und Bekanntmachung des Hinweises auf die Patenterteilung: **15.02.2012**
(21) Anmeldenummer: 08105343.1
(22) Anmeldetag: 15.09.2008
(51) Int. Cl.: B60W 30/14, B60W 50/08, B60W 30/08, G01S 13/93, B60T 15/46

(54) **Fahrerassistenzsystem für Kraftfahrzeuge**
Driver assistance system for motor vehicles
Système d'assistance à la conduite embarqué dans un véhicule automobile

(30) Priorität: 13.11.2007 DE 102007054095
(43) Veröffentlichungstag der Anmeldung: 20.05.2009
(73) Patentinhaber: ROBERT BOSCH GMBH, 70442 Stuttgart (DE)
(72) Erfinder: Schneider, Marcus, 71642 Ludwigsburg (DE)

(56) Entgegenhaltungen:
- DE-A1- 10 114 187
- DE-A1- 10 160 900
- DE-A1- 19 725 656
- DE-A1- 19 937 489
- DE-C1- 3 622 447
- DE-C1- 4 313 568
- GB-A- 871 641

## Beschreibung

### Stand der Technik

Die Erfindung betrifft ein Fahrerassistenzsystem für Kraftfahrzeuge, insbesondere für LKW oder Transporter.

Beispiele für bekannte Fahrerassistenzsysteme sind sogenannte ACC-Systeme, die es erlauben, den Abstand zu einem vorausfahrenden Fahrzeug mit Hilfe eines Radar- oder Lidarsensors zu messen und die Geschwindigkeit des eigenen Fahrzeugs so zu regeln, daß das vorausfahrende Fahrzeug in einem angemessenen Sicherheitsabstand verfolgt wird.

Ebenso sind Spurhalteassistenten sowie Spurverlassens-Warnsysteme bekannt, bei denen etwa mit einer Videokamera das Vorfeld des Fahrzeugs überwacht wird, Spurmarkierungen auf der Fahrbahn durch elektronische Bildauswertung identifiziert werden und der Fahrer eine akustische oder haptische Warnung erhält oder automatisch ein Eingriff in die Lenkung erfolgt, wenn der Fahrer im Begriff ist, die von ihm befahrene Fahrspur zu verlassen.

Weiterhin sind sogenannte Überholassistenten bekannt, bei denen mit geeigneten Ortungsgeräten der Rückraum des Fahrzeugs und/oder der tote Winkel neben dem Fahrzeug überwacht wird und dem Fahrer ein Warnsignal übermittelt wird, wenn er im Begriff ist, zu einem Überholmanöver anzusetzen, die Nebenspur jedoch nicht frei ist (DE 102 45 334 A1).

Aus DE 101 60 900 A1 ist ein Fahrerassistenzsystem nach dem Oberbegriff des Anspruchs 1 bekannt. Dies System umfaßt ein sensorisches System zur Erkennung einer Folgefahrtsituation, eine elektronische Bewertungseinrichtung zur Bewertung einer bei einem Überholvorgang voraussichtlich auftretenden Differenzgeschwindigkeit, und eine Ausgabeeinrichtung zur Ausgabe eines Signals, das in Abhängigkeit vom Bewertungsergebnis angibt ob ein Überholmanöver vertretbar ist.

Aus DE 197 25 656 A1 und DE 36 22 447 C1 ist es bekannt, die Leistungsreserve und damit die maximal erreichbare Geschwindigkeit des Fahrzeugs anhand der Motorleistung und der aktuellen Beschleunigung abzuschätzen. Die Beschleunigung wird dabei aus dem Signal des Tachometers berechnet.

### Offenbarung der Erfindung

Aufgabe der Erfindung ist es, ein Fahrerassistenzsystem zu schaffen, das zu einer Verbesserung des Verkehrsflusses und damit zu einer Verringerung der Stau- und Unfallgefahr beiträgt.

Diese Aufgabe wird erfindungsgemäß dadurch gelöst, daß das sensorische System einen Trägheits-Längsbeschleunigungssensor zur Messung der Längsbeschleunigung des Fahrzeugs aufweist und die Bewertungseinrichtung dazu ausgebildet ist, durch Vergleich der mit dem Trägheits-Längsbeschleunigungssensor gemessenen Beschleunigung mit der Änderung der direkt gemessenen Geschwindigkeit die Fahrbahnsteigung zu bestimmen und einen Schätzwert für die Differenzgeschwindigkeit unter Berücksichtigung der maximalen Motorleistung des Fahrzeugs und der Fahrbahnsteigung zu bestimmen.

Auf Autobahnen ist häufig zu beobachten, daß Fahrer relativ langsamer Fahrzeuge, beispielsweise Fahrer von LKW oder Transportern auf die Überholspur ausscheren, um ein vorausfahrendes, ebenfalls relativ langsames Fahrzeug zu überholen, obgleich zwischen diesen beiden Fahrzeugen nur eine sehr geringe Differenzgeschwindigkeit besteht, so daß der Überholvorgang sehr lange Zeit in Anspruch nimmt und die Überholspur entsprechend lange blockiert wird. Dies führt häufig zu Stockungen des Verkehrs, die sich insbesondere bei hohem Verkehrsaufkommen zu Staus, bis hin zum völligen Fahrzeugstillstand aufschaukeln können, was wiederum eine erhöhte Unfallhäufigkeit zur Folge hat.

Eine Ursache dafür, daß dieses Phänomen auch bei Berufskraftfahrern relativ häufig auftritt, besteht darin, daß ein Kraftfahrer, insbesondere wenn er unter Zeitdruck steht, dazu neigt, die Differenz zwischen der Geschwindigkeit des vorausfahrenden Fahrzeugs und der Geschwindigkeit, mit der er selbst bei freier Fahrbahn fahren könnte, zu überschätzen.

Das erfindungsgemäße Fahrerassistenzsystem hilft dem Fahrer, die Situation zutreffender einzuschätzen und von Überholmanövern Abstand zu nehmen, die zu einer erheblichen Behinderung der anderen Verkehrsteilnehmer führen würden. Da in einigen Ländern, beispielsweise in Deutschland, das Überholen mit zu geringer Differenzgeschwindigkeit einen Bußgeldtatbestand darstellt, nutzt ein solches Fahrerassistenzsystem auch dem Fahrzeughalter und dem jeweiligen Fahrer.

Erfindungsgemäß wird bei der Abschätzung der Differenzgeschwindigkeit auch die Leistungsreserve des Antriebssystems des eigenen Fahrzeugs berücksichtigt. Wenn das Fahrzeug eine Tempomatfunktion oder ein ACC-System aufweist, und die Messung der Relativgeschwindigkeit des vorausfahrenden Fahrzeugs ergibt, daß die Absolutgeschwindigkeit des vorausfahrenden Fahrzeugs nur wenig, beispielsweise weniger als 10 km/h, über der für das eigene Fahrzeug eingestellten Wunschgeschwindigkeit liegt, so sollte der Fahrer von einem Überholvorgang abgehalten werden. Bei voll beladenem Fahrzeug wird es an Steigungsstrecken häufig vorkommen, daß die Istgeschwindigkeit des eigenen Fahrzeugs hinter der eingestellten Wunschgeschwindigkeit zurückbleibt. Da die Längsbeschleunigung des eigenen Fahrzeugs mit Hilfe eines Trägheits-Beschleunigungssensors gemessen werden kann, beispielsweise mit Hilfe eines Längsbeschleunigungssensors, der zu einem ESP-System des Fahrzeugs gehört, läßt sich durch Vergleich der gemessenen Beschleunigung mit der Änderung der direkt gemessenen Geschwindigkeit die Fahrbahnsteigung bestimmen. Dies erlaubt es wiederum, unter Berücksichtigung des aktuellen Betriebszustands des Motors und der Istgeschwindigkeit auf die Zuladung des Fahrzeugs zurückzuschließen. Für eine gegebene Steigung läßt sich anhand dieser Daten die Geschwindigkeit vorausberechnen, die das eigene Fahrzeug bei einem Überholvorgang (bei unveränderter Steigung) maximal erreichen könnte. In Verbindung mit der direkt gemessenen Relativgeschwindigkeit des vorausfahrenden Fahrzeugs erlaubt dies eine genaue Abschätzung der Differenzgeschwindigkeit.

Vorteilhafte Ausgestaltungen und Weiterbildungen der Erfindung sind in den abhängigen Ansprüchen angegeben.

Das von der Ausgabeeinrichtung erzeugte Signal kann beispielsweise als Warnsignal an den Fahrer übermittelt werden. Es kann jedoch wahlweise oder zusätzlich auch dazu benutzt werden, die Maximalgeschwindigkeit des Fahrzeugs für ein gewisse Zeit so zu begrenzen, daß für den Fahrer der Anlaß zu einem Spurwechsel entfällt.

Bevorzugt ist zusätzlich eine Erkennungseinrichtung vorgesehen, die anhand des Lenkverhaltens des Fahrers und/oder anhand des Zustands des Fahrtrichtungsanzeigers (Blinkers) eine Überholabsicht des Fahrers erkennt, so daß die Ausgabe des Warnsignals und/oder die Begrenzung der Maximalgechwindigkeit nur dann erfolgt, wenn der Fahrer tatsächlich zu einem Überholmanöver ansetzt.

Wenn das Fahrzeug außerdem mit einem Spurhalteassistenten und/oder einem Spurverlassens-Warnsystem ausgerüstet ist, so kann dessen Sensorik, z. B. eine elektronische Kamera, auch zur Erkennung eines Spurwechsels und damit zur Erkennung der Überholabsicht des Fahrers genutzt werden.

Auch das sensorische System zur Erkennung einer Folgefahrtsituation kann Sensoren, insbesondere Ortungsgeräte wie Radarsensoren und dergleichen umfassen, die von mehreren Fahrerassistenzsystemen, beispielsweise einem ACC-System und dem erfindungsgemäßen System gemeinsam genutzt werden. Da beispielsweise mit Hilfe eines Radarsensors die Relativgeschwindigkeit des vorausfahrenden Fahrzeugs direkt gemessen werden kann, läßt sich die bei einem Überholvorgang voraussichtlich auftretende Differenzgeschwindigkeit besonders einfach abschätzen. Wenn beispielsweise das eigene Fahrzeug bereits nahezu mit der maximalen Geschwindigkeit fährt, die unter den gegebenen Bedingungen (Steigung, Ladung) möglich ist, und der Radarsensor bei Annäherung an ein vorausfahrendes Fahrzeug nur eine sehr geringe Relativgeschwindigkeit mißt, beispielsweise 5 km/h oder weniger, so ist abzusehen, daß die Differenzgeschwindigkeit während des Überholvorgangs kaum über der gemessenen Relativgeschwindigkeit liegen wird.

Das Signal des Längsbeschleunigungssensors kann in Verbindung mit der Verfolgung der Istgeschwindigkeit des eigenen Fahrzeugs auch ergänzend zu dem Ortungsgerät oder anstelle desselben dazu benutzt werden, eine Folgefahrtsituation zu erkennen. Wenn beispielsweise die Geschwindigkeit des eigenen Fahrzeugs über einen längeren Zeitraum, etwa über mehrere Minuten ständig in einem Geschwindigkeitsbereich liegt, der knapp unter der Maximalgeschwindigkeit des Fahrzeugs liegt (sei es die gesetzlich Maximalgeschwindigkeit oder die anhand der Motorleistung und der Ladung maximal mögliche Geschwindigkeit), so läßt dies darauf schließen, daß sich vor dem eigenen Fahrzeug ein anderes Fahrzeug befindet, das die Geschwindigkeit des eigenen Fahrzeugs bestimmt, d. h., daß eine Folgefahrtsituation vorliegt. Als zusätzliches Indiz können dabei leichte Schwankungen der Geschwindigkeit des eigenen Fahrzeugs gewertet werden, da solche Schwankungen selten in einer Freifahrtsituation auftreten, sondern typischerweise dadurch verursacht werden, daß der Fahrer den Abstand zum vorausfahrenden Fahrzeug korrigiert.

Wenn auf einer Steigungsstrecke die Geschwindigkeit beider Fahrzeugs abnimmt, läßt sich anhand der vom Längsbeschleunigungsensor gelieferten Steigungsinformation abschätzen, ob das eigene Fahrzeug noch über ausreichende Leistungsreserven für einen Überholvorgang verfügt oder nicht.

Sofern außerdem ein Navigationssystem verfügbar ist, dessen digitale Karte auch Information über das Landschaftsrelief und damit über die Steigung auf dem vorausliegenden Streckenabschnitt enthält, so kann das System anhand dieser Steigungsinformation auch vorausschauend die Maximalgeschwindigkeit des eigenen Fahrzeugs für den Streckenabschnitt berechnen, der für einen Überholvorgang benötigt würde, und wenn sich ergibt, daß die Geschwindigkeit des vorausfahrenden Fahrzeugs bei zunehmender Steigung weniger stark abnimmt (etwa weil es nicht so schwer beladen ist), kann selbst dann von einem Überholvorgang abgeraten werden, wenn die aktuelle Differenzgeschwindigkeit noch relativ hoch ist.

### Kurze Beschreibung der Zeichnungen

Ein Ausführungsbeispiel der Erfindung ist in den Zeichnungen dargestellt und in der nachfolgenden Beschreibung näher erläutert.

Es zeigen:
- Fig. 1: ein Blockdiagramm eines erfindungsgemäßen Fah- rerassistenzsystems; und
- Figuren 2 bis 4: Zeitdiagramme zur Erläuterung der Funktions- weise des Fahrerassistenzsystems in unter- schiedlichen Verkehrssituationen.

### Ausführungsformen der Erfindung

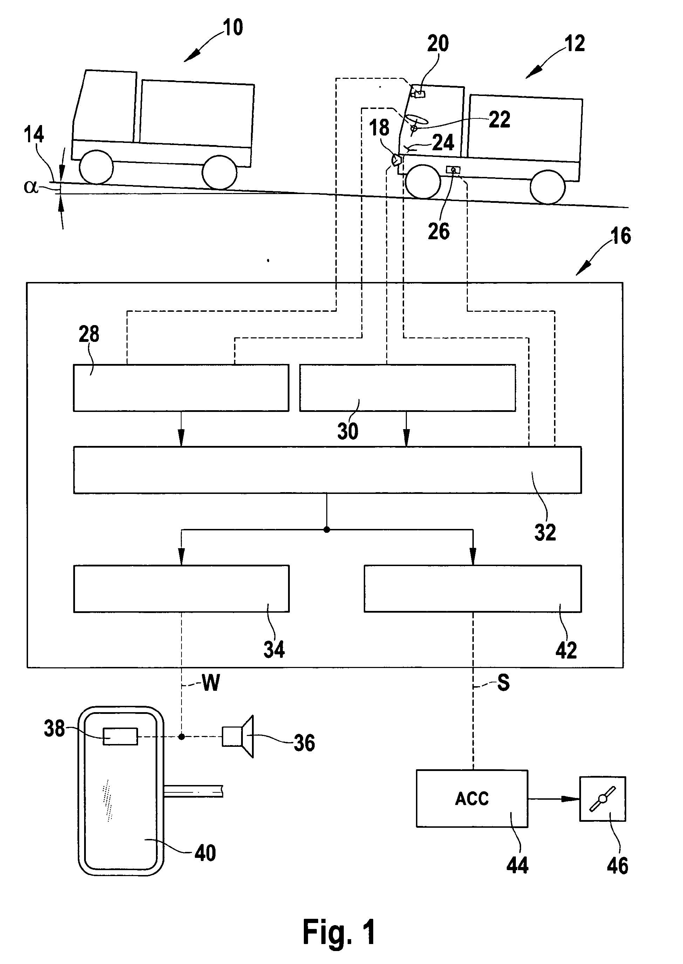

In Fig. 1 sind schematisch zwei LKW 10, 12 dargestellt, die auf einer ansteigenden Fahrbahn 14 fahren. Der hintere LKW 12 ist mit einem erfindungsgemäßen Fahrerassistenzsystem 16 ausgerüstet, das hier als Block dargestellt ist. In der Praxis wird dieses Fahrerassistenzsystem durch ein elektronisches Datenverarbeitungssystem gebildet, das eingangsseitig mit verschiedenen sensorischen Komponenten kommuniziert und Ausgangssignale an eine Mensch/Maschinenschnittstelle oder verschiedene Aktoren des Fahrzeugs oder gegebenenfalls auch an ein anderes Fahrerassistenzsystem ausgibt.

Im gezeigten Beispiel umfassen die sensorischen Komponenten, mit denn das Fahrerassistenzsystem 16 kommuniziert, einen vorn im Fahrzeug 12 eingebauten Radarsensor 18, eine Videokamera 20, einen Zustandssensor 22 zur Erfassung des Zustands eines Blinkschalters des Fahrzeugs, einen Leistungssensor 24, hier symbolisiert durch einen Gaspedalsensor, zur Erfassung der aktuellen Motorleistung des LKW 12, und einen Längsbeschleunigungssensor 26, der beispielsweise in ein nicht näher gezeigtes ESP-System des LKW 12 integriert sein kann.

Der Radarsensor 18 dient dazu, Fahrzeuge im Vorfeld des LKW 12 zu orten und deren Abstände und Relativgeschwindigkeiten sowie deren Azimutwinkel zu messen. Anhand des Azimutwinkels läßt sich dann entscheiden, ob ein geortetes Fahrzeug, wie im gezeigten Beispiel der LKW 10, sich auf der von dem eigenen Fahrzeug (LKW 12) befahrenen Spur befindet. Diese Situation, in der ein in der eigenen Fahrspur vorausfahrendes Fahrzeug verfolgt wird, soll im folgenden als Folgefahrtsituation bezeichnet werden.

Der Längsbeschleunigungssensor 26 mißt die in Richtung der Längsachse des LKW 12 wirkende Komponente der Fahrzeugbeschleunigung. Da dieser Sensor ein Trägheitssensor ist, wird auch die auf ihn einwirkende Schwerkraft als Beschleunigung interpretiert. So kann mit Hilfe des Längsbeschleunigungssensors 26 auch die Steigung der Fahrbahn 14 gemessen werden. Wenn beispielsweise die von einem herkömmlichen Tachometer gemessene Istgeschwindigkeit des LKW 12 konstant ist, so ist die vom Längsbeschleunigungssensor 26 gemessene Beschleunigung gleich der Fallbeschleunigung g multipliziert mit dem Tangens des Steigungswinkels α der Fahrbahn 14. Durch Vergleich dieser Steigung mit einem vom Leistungssensor 24 oder z. B. einem Motormanagementsystem gelieferten Maß für die Motorleistung läßt sich dann der Beladungszustand des LKW 12 bestimmen. Aus diesem Beladungszustand kann in Verbindung mit der bekannten maximalen Motorleistung und der gemessenen Steigung der Fahrbahn 14 die theoretische Höchstgeschwindigkeit des LKW 12 berechnet werden.

Die Videokamera 20 ist so angeordnet, daß sie ein Bild von der Fahrbahn unmittelbar vor dem LKW 12 aufnimmt, einschließlich der auf der Fahrbahn vorhandenen Fahrspurmarkierungen. Mit Hilfe eines nicht näher gezeigten elektronischen Bildauswertungssystems werden die Fahrspurmarkierungen erkannt, so daß sich erkennen läßt, ob sich das eigene Fahrzeug, also der LKW 12, annähernd auf der Spurmitte befindet, oder im Begriff ist, eine der Spurgrenzen zu überfahren. Ein hier nicht näher gezeigtes Spurverlassens-Warnsystem kann diese Informationen dazu nutzen, den Fahrer durch ein akustisches Signal, durch ein Vibrieren des Lenkrads oder dergleichen, darauf hinzuweisen, daß er im Begriff ist, seine derzeitige Fahrspur zu verlassen.

Der Zustandssensor 22 erkennt den Zustand des Fahrtrichtungsanzeigers (Blinkers) des LKW 12. Wenn beispielsweise der linke Blinker gesetzt ist und dann das Videosystem erkennt, daß der LKW 12 die linke Spurgrenze überfährt, so wird keine Spurverlassenswarnung ausgegeben, weil davon auszugehen ist, daß der Fahrer absichtlich einen Spurwechsel vornimmt, etwa um den vorausfahrenden LKW 10 zu überholen.

Die Auswertung der Daten der Videokamera 20 und des Zustandssensor 22 erfolgt im Fahrerassistenzsystem 16 in einem Erkennungsmodul 28, das dazu dient, eine etwaige Überholabsicht des Fahrers zu erkennen.

Weiterhin enthält das Fahrerassistenzsystem 16 ein Erkennungsmodul 30 zur Erkennung einer Folgefahrtsituation. Diese Erkennung kann im gezeigten Beispiel einfach durch Auswertung des Signals des Radarsensors 18 erfolgen. In Fahrzeugen, in denen kein Radarsensor oder vergleichbares Ortungsgerät vorhanden ist, kann die Folgefahrtsituation jedoch auch anhand der Istgeschwindigkeit des eigenen Fahrzeugs und anhand der Daten des Längsbeschleunigungssensors 26 erkannt werden, wie weiter unten näher erläutert werden soll.

In dem hier gezeigten Beispiel dienen die Signale des Leistungssensors 24 und des Längsbeschleunigungssensors 26 zusammen mit den Daten des Radarsensors 18 dazu, in einem Bewertungsmodul 32 die Differenzgeschwindigkeit V_{diff} abzuschätzen, um die der LKW 12 voraussichtlich schneller sein wird als der LKW 10, wenn der erstere den letzteren überholt.

Wenn im Erkennungsmodul 30 eine Folgefahrtsituation erkannt wird und wenn gleichzeitig das Erkennungsmodul 28 eine Überholabsicht des Fahrers erkennt und außerdem die Bewertung von V_{diff} im Bewertungsmodul 32 ergibt, daß die Differenzgeschwindigkeit, mit welcher der Überholvorgang erfolgen würde, unterhalb eines bestimmten Wertes liegt, beispielsweise unterhalb von 10 km/h, so aktiviert das Bewertungsmodul 32 eine erste Ausgabeeinrichtung 34 zur Ausgabe eines Warnsignals W an den Fahrer. Im gezeigten Beispiel besteht dieses Warnsignal in einem akustischen Signal, das über einen Lautsprecher 36 ausgegeben wird, sowie zusätzlich im Aufleuchten oder Blinken einer Leuchtanzeige 38, die, wie bei einigen bekannten Überholassistenten, in den linken Außenspiegel 40 des LKW 12 integriert ist.

Gleichzeitig mit der ersten Ausgabeeinrichtung 34 aktiviert das Bewertungsmodul 32 auch eine zweite Ausgabeeinrichtung 42, die die Ausgabe eines Sperrsignals S bewirkt, das im Ergebnis dazu führt, daß die maximale Geschwindigkeit des LKW 12 für eine gewisse Zeit so weit reduziert wird, daß der vorausfahrende LKW 10 nicht mehr überholt werden kann. Im gezeigten Beispiel wird dieses Sperrsignal an ein anderes Fahrerassistenzsystem ausgegeben, nämlich an ein ACC-System 44, das ebenfalls die Signale des Radarsensors 18 nutzt und die Geschwindigkeit des LKW 12 automatisch so regelt, daß der LKW 10 in einem angemessenen Sicherheitsabstand verfolgt wird. Dies wird hier symbolisiert durch die Einwirkung des ACC-Systems 44 auf eine Drosselklappe 46. Im Normalfall kann der Fahrer das ACC-System 44 mit dem Gaspedal übersteuern, wenn er einen Überholvorgang auslösen will. Das von der Ausgabeeinrichtung 42 erzeugte Sperrsignal S hat jedoch die Wirkung, daß dieses Übersteuern für eine gewisse Zeit verhindert wird.

Eine weitere Wirkung des Sperrsignals S kann darin bestehen, daß die Regelung des Abstands zum LKW 10 auch dann fortgesetzt wird, wenn der Fahrer des LKW 12 das Warnsignal W ignoriert und einen Spurwechsel eingeleitet hat, so daß der LKW 10 nun nicht mehr das in der eigene Spur unmittelbar vorausfahrende Fahrzeug ist. Auf diese Weise wird der Fahrer dazu gezwungen, den bereits eingeleiteten Überholvorgang abzubrechen.

In einer modifizierten Ausführungsform kann die Leuchtanzeige 38 auch schon aktiviert werden, sobald eine Folgefahrtsituation erkannt wird und die Bewertung ergibt, daß die Differenzgeschwindigkeit für einen Überholvorgang zu gering ist, auch wenn noch keine Überholabsicht des Fahrers erkennbar ist. In der Regel wird der Fahrer in den Außenspiegel 40 schauen, bevor er den linken Blinker setzt und zu einem Überholmanöver ansetzt. Durch die "vorbeugende" Ausgabe des Warnsignals W über die Leuchtanzeige 38 kann so verhindert werden, daß der Fahrer durch Setzen des Blinkers einen Überholvorgang ankündigt, der dann letzlich doch nicht ausgeführt wird.

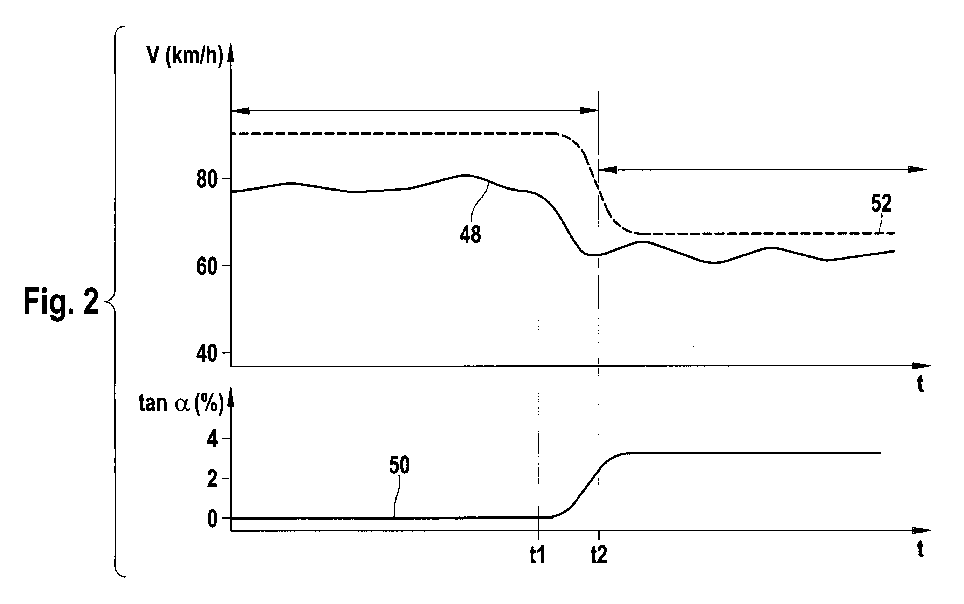

In Fig. 2 wird durch die Kurve 48 ein typischer Geschwindigkeitsverlauf angegeben, der die Arbeitsweise des Fahrerassistenzsystems 16 illustriert. Die Kurve 50 gibt dazu die Steigung der Fahrbahn am jeweiligen Ort des LKW 12 an.

Zunächst fährt der LKW 12 auf ebener Fahrbahn (Steigungtnull) mit einer Geschwindigkeit, die knapp unter der in Deutschland für LKW auf Autobahnen zulässigen Höchstgeschwindigkeit von 80 km/h. liegt. Die Wunschgeschwindigkeit ist auf 80 km/h eingestellt, kann jedoch nicht eingehalten werden, da der Radarsensor 18 den etwas langsameren vorausfahrenden LKW 10 erkennt und eine Geschwindigkeitsanpassung bewirkt. Das Erkennungsmodul 30 erkennt somit eine Folgefahrtsituation.

Die Folgefahrtsituation könnte in einer modifizierten Form auch ohne den Radarsensor 18 allein anhand des Geschwindigkeitsverlaufes erkannt werden. Wenn nämlich kein vorausfahrendes Fahrzeug vorhanden wäre, so würde der Fahrer des LKW 12 wahrscheinlich den Fuß ruhig auf dem Gaspedal lassen oder, soweit vorhanden, den Tempomat aktivieren, um konstant die Höchstgeschwindigkeit von 80 km/h einzuhalten. Da die Fahrbahn nicht ansteigt, kann die etwas geringere Geschwindigkeit auch nicht durch die mangelnde Motorleistung verursacht sein, sondern der einzig plausible Grund ist das Vorhandensein des vorausfahrenden LKW 10. Auch die in der Kurve 48 erkennbaren leichten Fluktuationen der Geschwindigkeit deuten darauf hin, daß der Fahrer mit dem Gaspedal oder durch Ein- und Ausschalten des Tempomaten den Abstand zum vorausfahrenden LKW 10 von Zeit zu Zeit korrigiert. Die durch die Kurve 50 angegebene Fahrbahnsteigung, hier die Steigung null, ist daran erkennbar, daß bei konstanter Fahrgeschwindigkeit der Längsbeschleunigungssensor 26 auch keinerlei Beschleunigung mißt.

Die gestrichelt eingezeichnete Kurve 52 in Fig. 2 gibt die Leistungsreserve des LKW 12 an, d. h., die unter den gegebenen Bedingungen erreichbare Höchstgeschwindigkeit dieses LKW. Es wird hier angenommen, daß die Geschwindigkeit auf 90 km/h gedrosselt ist, so daß die Höchstgeschwindigkeit bei ebener Fahrbahn oder auf Gefällstrecken auf 90 km/h begrenzt ist. Auf Steigungsstrecken ist die Höchstgeschwindigkeit dagegen durch die Steigung und den Ladezustand des LKW 12 bestimmt, und sie läßt sich durch Vergleich der aktuellen Motorleistung mit der vom Längsbeschleunigungssensor 26 gemessenen Fahrbahnsteigung bestimmen.

Zum Zeitpunkt t1 erreicht der vorausfahrende LKW 10 einen ansteigenden Streckenabschnitt, was, da dieser LKW schwer beladen ist, zu einer Abnahme der Geschwindigkeit führt. Dementsprechend muß auch die Geschwindigkeit des LKW 12 angepaßt werden, wie anhand des Abfalls der Kurve 48 nach dem Zeitpunkt t1 zu erkennen ist.

Kurze Zeit später erreicht auch der LKW 12 den steigenden Streckenabschnitt, so daß die Kurve 50 ansteigt. Da, wie hier angenommen wird, auch der LKW 12 voll beladen ist, führt dies zu einer Abnahme der durch die Kurve 52 repräsentierten Höchstgeschwindigkeit. Die Differenz zwischen dieser Höchstgeschwindigkeit und der durch die Kurve 48 repräsentierten aktuellen Geschwindigkeit des LKW 12 (die im wesentlichen auch mit der Geschwindigkeit des vorausfahrenden LKW 10 übereinstimmen wird) ist die Differenzgeschwindigkeit, mit der ein Überholvorgang bestenfalls durchgeführt werden könnte. Zum Zeitpunkt t2 nimmt diese Differenzgeschwindigkeit - wegen der schweren Ladung des LKW 12 und der Zunahme der Fahrbahnsteigung - auf unter 10 km/h ab, so daß der Überholvorgang übermäßig lange dauern würde und zu einer unzulässigen Verkehrsbehinderung führen würde. Ab diesem Zeitpunkt stellt daher das Bewertungsmodul 32 fest, daß die Einleitung eines Überholvorgangs nicht mehr gebilligt werden kann, und es wird gegebenenfalls die Leuchtanzeige 38 aktiviert. Jedenfalls werden das Warnsignal W und das Sperrsignal S ausgegeben, sobald das Erkennungsmodul 28 anhand des gesetzten Fahrtrichtungsanzeigers und anhand der von der Videokamera 20 erkannten Annäherung an die linke Fahrspurgrenze eine Überholabsicht des Fahrers erkennt.

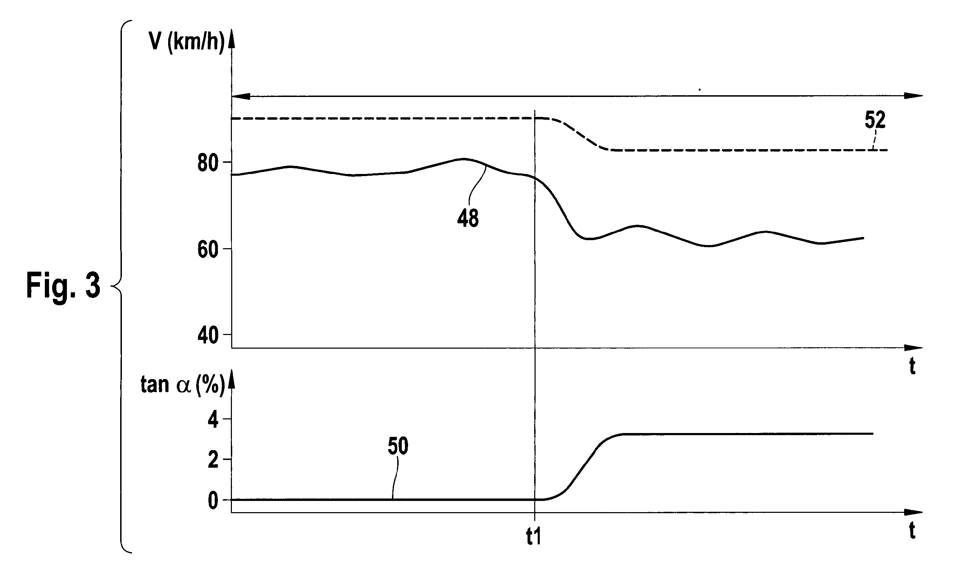

Fig. 3 illustriert die gleiche Situation wie Fig. 2" jedoch mit dem Unterschied, daß nun der LKW 12 leer ist, so daß seine Höchstgeschwindigkeit (Kurve 52) weniger stark von der Fahrbahnsteigung abhängig ist. Bei unverändertem Beladungszustand des vorausfahrenden LKW 10 führt dies dazu, daß nach dem Zeitpunkt t1 die Differenzgeschwindigkeit nicht abnimmt, sondern sogar noch größer wird. Es stehen daher ausreichende Leistungsreserven für einen zügigen Überholvorgang zur verfügung.

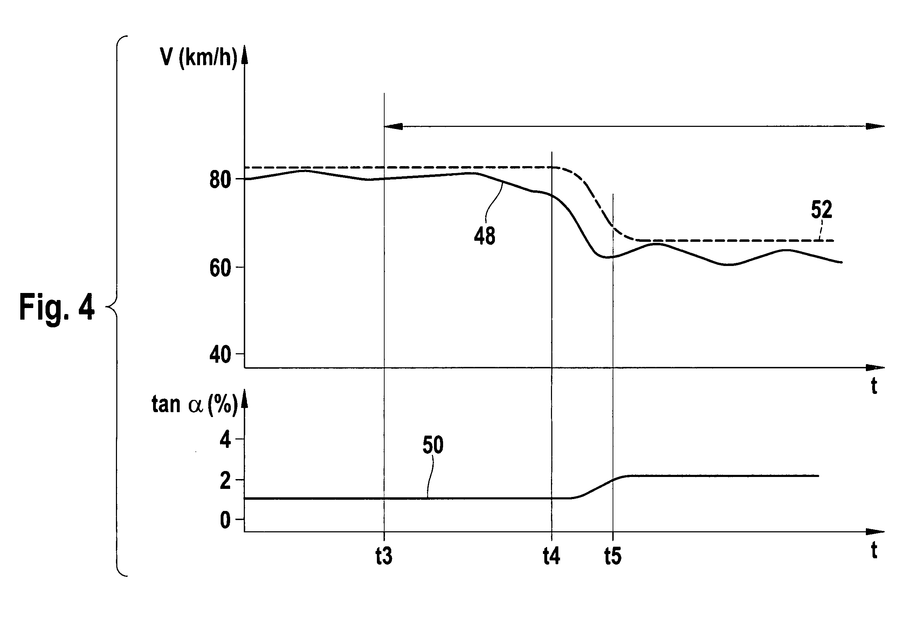

Fig. 4 illustriert eine Situation, in der der LKW 12 bis zum Zeitpunkt t4 eine sanft ansteigende Strecke befährt, was jedoch aufgrund der Ladung dazu führt, daß der LKW 12 schon nahe an der Leistungsgrenze (Kurve 52) fährt. Zum Zeitpunkt t3 wird durch den Radarsensor oder durch Auswertung der Geschwindigkeitskurve eine Folgefahrtsituation erkannt, und da die Differenzgeschwindigkeit deutlich unter 10 km/h liegt, stellt das Bewertungsmodul 32 schon zu diesem Zeitpunkt fest, daß die Bedingungen für einen zügigen Überholvorgang nicht gegeben sind.

Zwischen den Zeitpunkten t4 und t5 nimmt die Fahrbahnsteigung zu, was zu einer vorübergehenden Zunahme der Differenzgeschwindigkeit führt, da der LKW 12 den steileren Abschnitt später erreicht als der vorausfahrende LKW 10. Das Bewertungsmodul 32 arbeitet mit einer gewissen Hysterese, so daß es auch dann von einem Überholvorgang "abrät", wenn die Differenzgeschwindigkeit vorübergehend den Schwellenwert von 10 km/h erreicht. Wenn zum Zeitpunkt t5 auch der LKW 12 den steileren Streckenabschnitt erreicht hat, sinkt die Leistungsgrenze wieder nahezu auf die Istgeschwindigkeit ab, was bestätigt, daß keine Reserven für einen Überholvorgang zur Verfügung stünden.

## Patentansprüche

1. Fahrerassistenzsystem für Kraftfahrzeuge (12), mit einem sensorischen System (18, 26, 30) zur Erkennung einer Folgefahrtsituation, einer elektronischen Bewertungseinrichtung (32) zur Bewertung einer bei einem Überholvorgang voraussichtlich auftretenden Differenzgeschwindigkeit (V_{diff}), und einer Ausgabeeinrichtung (34, 32) zur Ausgabe eines Signals (W, S), das in Abhängigkeit vom Bewertungsergebnis angibt, ob ein Überholmanöver vertretbar ist **dadurch gekennzeichnet, daß** das sensorische System einen Trägheits-Längsbeschleunigungssensor (26) zur Messung der Längsbeschleunigung des Fahrzeugs (12) aufweist und die Bewertungseinrichtung (32) dazu ausgebildet ist, durch Vergleich der mit dem Trägheits-Längsbeschleunigungssensor (26) gemessenen Beschleunigung mit der Änderung der direkt gemessenen Geschwindigkeit die Fahrbahnsteigung zu bestimmen und einen Schätzwert für die Differenzgeschwindigkeit unter Berücksichtigung der maximalen Motorleistung des Fahrzeugs (12) und der Fahrbahnsteigung zu bestimmen.

2. Fahrerassistenzsystem nach Anspruch 1, **dadurch gekennzeichnet, daß** das sensorische System ein Ortungsgerät (18) aufweist, das in der Lage ist, das vorausfahrende Fahrzeug (10) zu orten und dessen Abstand zu messen.

3. Fahrerassistenzsystem nach Anspruch 2, **dadurch gekennzeichnet, daß** die Bewertungseinrichtung (32) dazu ausgebildet ist, die Differenzgeschwindigkeit (V_{diff}) unter Berücksichtigung der vom Ortungsgerät (18) gemessenen Relativgeschwindigkeit des vorausfahrenden Fahrzeugs (10) zu bestimmen.

4. Fahrerassistenzsystem nach einem der vorstehenden Ansprüche, **dadurch gekennzeichnet, daß** das sensorische System dazu ausgebildet ist, eine Folgefahrtsituation anhand des zeitlichen Verlaufs der Geschwindigkeit und der Längsbeschleunigung des Fahrzeugs (12) zu erkennen.

5. Fahrerassistenzsystem nach einem der vorstehenden Ansprüche, **dadurch gekennzeichnet, daß** mindestens ein von der Ausgabeeinrichtung (34, 42) ausgegebenes Signal ein Warnsignal (W) ist, das dem Fahrer anzeigt, daß ein Überholvorgang nicht vertretbar ist.

6. Fahrerassistenzsystem nach einem der vorstehenden Ansprüche, **dadurch gekennzeichnet, daß** wenigstens ein von der Ausgabeeinrichtung (34, 42) ausgegebenes Signal ein Sperrsignal (S) ist, das eine vorübergehende Drosselung der Maximalgeschwindigkeit des Fahrzeugs (12) bewirkt.

7. Fahrerassistenzsystem nach einem der vorstehenden Ansprüche, **dadurch gekennzeichnet, daß** ein Erkennungsmodul (28) zur Erkennung einer Überholabsicht des Fahrers vorgesehen ist, und daß die Ausgabeeinrichtung (34, 42) dazu ausgebildet ist, das Signal (W, S) auszugeben, wenn eine Überholabsicht des Fahrers erkannt wird.

8. Fahrerassistenzsystem nach Anspruch 7, **dadurch gekennzeichnet, daß** das Erkennungsmodul (28) mit einem Zustandssensor (24) verbunden ist, der den Zustand eines Fahrtrichtungsanzeigers des Fahrzeugs erfaßt.

9. Fahrerassistenzsystem nach Anspruch 7 oder 8, **dadurch gekennzeichnet, daß** das Erkennungsmodul (28) Signale von einem Videosystem (20) erhält, das dazu ausgebildet ist, Fahrbahnmarkierungen auf der Fahrbahn zu erkennen.

## Claims

1. Driver assistance system for motor vehicles (12), having a sensor system (18, 26, 30) for detecting a follow-on travel situation, an electronic evaluation device (32) for evaluating a differential speed (V_{diff}) which is expected to occur during an overtaking process, and an output device (34, 42) for outputting a signal (W, S) which indicates, as a function of the evaluation result, whether an overtaking manoeuvre is acceptable, **characterized in that** the sensor system has an inertia longitudinal acceleration sensor (26), for measuring the longitudinal acceleration of the vehicle (12), and the evaluation device (32) is designed to determine the gradient of the carriageway by comparison of the acceleration measured with the inertia longitudinal acceleration sensor (26) with the change in the directly measured speed, and to determine an estimated value for the differential speed taking into account the maximum engine power of the vehicle (12) and the gradient of the carriageway.

2. Driver assistance system according to Claim 1, **characterized in that** the sensor system has a locating device (18) which is capable of locating the vehicle (10) travelling ahead and of measuring the distance therefrom.

3. Driver assistance system according to Claim 2, **characterized in that** the evaluation device (32) is designed to determine the differential speed (V_{diff}) taking into account the relative speed of the vehicle (10) travelling ahead, measured by the locating device (18).

4. Driver assistance system according to one of the preceding claims, **characterized in that** the sensor system is designed to detect a follow-on travel situation on the basis of the time profile of the speed and of the longitudinal acceleration of the vehicle (12).

5. Driver assistance system according to one of the preceding claims, **characterized in that** at least one signal which is output by the output device (34, 42) is a warning signal (W) which indicates to the driver that an overtaking process is not acceptable.

6. Driver assistance system according to one of the above claims, **characterized in that** at least one signal which is output by the output device (34, 42) is a blocking signal (S) which brings about temporary restriction of the maximum speed of the vehicle (12).

7. Driver assistance system according to one of the preceding claims, **characterized in that** a detection module (28) is provided for detecting an intention by the driver to overtake, and **in that** the output device (34, 42) is designed to output the signal (W, S) if an intention by the driver to overtake is detected.

8. Driver assistance system according to Claim 7, **characterized in that** the detection module (28) is connected to a state sensor (24) which senses the state of a travel direction indicator of the vehicle.

9. Driver assistance system according to Claim 7 or 8, **characterized in that** the detection module (28) receives signals from a video system (20) which is designed to detect carriageway markings on the carriageway.

## Revendications

1. Système d'assistance au conducteur pour véhicules automobiles (12), comprenant un système de détection (18, 26, 30) pour reconnaître une situation de circulation à venir, un dispositif d'estimation électronique (32) pour estimer une vitesse différentielle (V_{diff}) qui se produira vraisemblablement lors d'une manoeuvre de dépassement et un dispositif de diffusion (34, 42) pour délivrer un signal (W, S) qui indique, en fonction du résultat de l'estimation, si une manoeuvre de dépassement est réalisable, **caractérisé en ce que** le système de détection présente un détecteur d'accélération longitudinale à inertie (26) pour mesurer l'accélération longitudinale du véhicule (12) et le dispositif d'estimation (32) est configuré pour déterminer la pente de la voie de circulation en comparant l'accélération mesurée avec le détecteur d'accélération longitudinale à inertie (26) avec la modification de la vitesse mesurée directement et pour déterminer une valeur estimée pour la vitesse différentielle en tenant compte de la puissance maximale du moteur du véhicule (12) et de la pente de la voie de circulation.

2. Système d'assistance au conducteur selon la revendication 1, **caractérisé en ce que** le système de détection présente un appareil de localisation (18) qui est en mesure de localiser le véhicule qui précède (10) et de mesurer sa distance.

3. Système d'assistance au conducteur selon la revendication 2, **caractérisé en ce que** le dispositif d'estimation (32) est configuré pour déterminer la vitesse différentielle (V_{diff}) en tenant compte de la vitesse relative du véhicule qui précède (10) mesurée par l'appareil de localisation (18).

4. Système d'assistance au conducteur selon l'une des revendications précédentes, **caractérisé en ce que** le système de détection est configuré pour reconnaître une situation de conduite à venir au moyen de la courbe dans le temps de la vitesse et de l'accélération longitudinale du véhicule (12).

5. Système d'assistance au conducteur selon l'une des revendications précédentes, **caractérisé en ce qu'**au moins un signal délivré par le dispositif de diffusion (34, 42) est un signal d'alerte (W) qui indique au conducteur qu'un dépassement n'est pas réalisable.

6. Système d'assistance au conducteur selon l'une des revendications précédentes, **caractérisé en ce qu'**au moins un signal délivré par le dispositif de diffusion (34, 42) est un signal de blocage (S) qui provoque une restriction temporaire de la vitesse maximale du véhicule (12).

7. Système d'assistance au conducteur selon l'une des revendications précédentes, **caractérisé en ce qu'**il est prévu un module de reconnaissance (28) pour reconnaître une intention de dépassement du conducteur et **en ce que** le dispositif de diffusion (34, 42) est configuré pour délivrer le signal (W, S) lorsqu'une intention de dépassement du conducteur est reconnue.

8. Système d'assistance au conducteur selon la revendication 7, **caractérisé en ce que** le module de reconnaissance (28) est relié avec un détecteur d'état (24) qui détecte l'état d'un indicateur de sens de déplacement du véhicule.

9. Système d'assistance au conducteur selon la revendication 7 ou 8, **caractérisé en ce que** le module de reconnaissance (28) reçoit des signaux de la part d'un système vidéo (20) qui est configuré pour reconnaître le marquage horizontal sur la voie de circulation.
